# EUROPEAN PATENT SPECIFICATION

(11) **EP 1 350 358 B1**
(45) Date of publication and mention of the grant of the patent: **29.10.2008**
(21) Application number: 01989609.1
(22) Date of filing: 20.12.2001
(51) Int. Cl.: H04L 9/32

(54) **METHOD AND SYSTEM FOR PROCESSING OF DOCUMENTS WITH ELECTRONIC SIGNATURES**
VERFAHREN UND VORRICHTUNG ZUR BEARBEITUNG VON DOKUMENTEN MIT ELEKTRONISCHEN SIGNATUREN
PROCEDE ET SYSTEME DE TRAITEMENT DE DOCUMENTS COMPORTANT UNE SIGNATURE ELECTRONIQUE

(30) Priority: 10.01.2001 EP 01100569
(43) Date of publication of application: 08.10.2003
(73) Proprietor: International Business Machines Corporation, Armonk, NY 10504 (US)
(72) Inventor: WAIDNER, Michael, CH-8804 AU-Waedenswill (CH)
(74) Representative: Duscher, Reinhard
(86) International application number: PCT/EP2001/015159
(87) International publication number: WO 2002/055976

(56) References cited:
- WO-A-92/12485
- US-A- 5 390 247
- US-A- 6 032 147
- BERBECARU ET AL.: "Towards concrete application of electronic signature" RIVISTA DI INFORMATICA, vol. 31, no. 1, January 2001 (2001-01) - April 2001 (2001-04), pages 41-57, XP002201887 IT

## Description

### 1. Background of the Invention

### 1.1 Field of the Invention

The present invention relates to a method and corresponding system for the computerized processing of documents with electronic signatures.

### 1.2 Description and Disadvantages of Prior Art

Electronic signatures are a key component for the security of electronic commerce: essentially they allow to mimic the function of handwritten signatures in the digital world.

For instance, if a party ***A*** wants to digitally sign any kind of document like for instance a contract c comprising digital data ***d*** then ***A*** applies his or her secret signature key ***sk*** to this data, resulting in a electronic signature ***s*.** A ***secure*** electronic signature scheme guarantees that without knowing ***sk*** nobody can create an electronic signature ***s*** that would pass the verification with the corresponding public verification key ***pk.*** Thus everybody who knows ***pk*** can verify that indeed ***A***'s corresponding secret signature key was used to create ***s*** from ***d*.** If the system is properly set-up and operated this gives strong evidence that indeed ***A*** electronically signed the data ***d.***

In order to conclude **"*A*** signed contract ***c*"** the link between the contract ***c*** and the data ***d*** representing it for ***A*** must be unambiguous for everybody who relies on ***A*'s** signature, or in other words: applications using electronic signatures have to provide an **"unambiguous interpretation"** for signed data. Such an interpretation ensures that it is impossible to find two different contracts ***c*₁** and ***c*₂** which are both represented by the same data ***d*.**

Very often this is not the case. For instance, assume that ***d*** is a document written in some modern word processor supporting macros (e.g., Microsoft Word). Document ***d*** might result in different visual representations on different machines, i.e. in visually and semantically ***different*** contracts ***c*₁** and ***c*₂**. For instance, two computers might have two versions of a font installed, one using the symbol for Italian Lira instead of the symbol for European Euro. Obviously this could result in significantly different contracts, one talking about Lira, the other about Euro. Or ***d*** might include a macro that shows completely different text depending on the current time and date, or ***d*** might include hyperlinks to other documents which might be replaced over time, and so on. Using a presentation-oriented format like PDF or Postscript does not improve the situation, as such languages basically offer the same features (macros, hyperlinks, use of installed fonts). Expressed in more general terms the observation is that context dependencies influencing the interpretation of document ***d*** might be different on different systems which store and interpret the signed contract, resulting in documents with different meaning. As explained, the result could be that document ***d*** has been signed electronically by party ***A*** having one interpretation on party ***A***'s system but once that signed document has been transmitted to a third party's ***B*** system it unfolds to a different interpretation though party ***B*** can verify that the document has been signed by party ***A*.** Clearly such different interpretations induced by the context cannot be legally binding to the signing party ***A*.**

One possible solution to this problem is to fix an interpretation that is independent of these existing word processors and presentation-oriented formats.

It has been proposed to directly sign the graphical representation, i.e., ***c*** is something that can be displayed on a computer screen, and ***d*** is basically the graphical representation of this document on the computer screen.

While this solves the interpretation problem it introduces a new one: it is not possible anymore to process the signed data automatically, as the information about the components and their internal structure and layout of the data is lost. As the signed document has simply become an image it has become impossible to process the document further in the course of electronic commerce by exploiters.

Therefore all other attempts according to the state of the art to solve the interpretation problem have chosen a different direction consisting of two parts: 1.) a representation ***d**** in a certain simple formal language that can be processed automatically but cannot be shown to the user directly (e.g., an XML-based signature mark-up language), and 2.) an interpreter that hopefully unambiguously maps this ***d**** to something that can be shown to the user, e.g., a bitmap. Despite of these approaches most concrete proposals still suffer from some of the problems mentioned before (e.g., they still depend on the fonts installed on the system, so a Lira symbol might still be replaced by a Euro symbol); or in other words, a stable interpretation cannot be guaranteed. But the main problem is that they require all applications that produce data that shall be signed or that process signed data to use this language for their outputs or inputs, respectively. Therefore, this is a very inflexible and limiting approach.

In one proposed embodiment of this approach ***d*** actually represents* a pair of documents ***(d*, *d*'*)*** where ***d*** is a bitmap and ***d*'** is a representation that can be automatically processed. The bitmap fixes the interpretation like in the first approach, but the link between ***d*** and ***d*'** is not verified, i.e., there is no guarantee that they actually correspond to each other. Nothing prevents a cheating signer to make up arbitrary, unrelated pairs ***(d, d').***

As another example of prior art the patent application WO 92/12485 titled "DEVICES TO SUPPLY AUTHENTICATED TIME AND TIME STAMP AND AUTHENTICATE DIGITAL DOCUMENTS" can be mentioned. This document discloses a method to be applied by an arbitrator, also called notary. The arbitrator has a mode of operation, if presented with ascii text, in which the authentication is calculated only after the document text has been transformed to a standardized, but still readable, format, e.g. with one space between all words and symbols, no tabs or new lines, and with data in unusual formats, e.g. scientific formulas, omitted from consideration. Obviously, transformations which would reduce formulas, tables, special fonts, etc. to a standard form are also possible. (Complex documents, e.g, digital pictures, if they are to be recognizable, would have to be archived in their original digital form in order to be verifiable.) In this way a conventional ascii document could be verified even if it had previously been copied in ways such as retyping or even cursive transcription, which altered the paragraph or word spacing format.

As a significant drawback the standardized format according to this document is created by a transformation process which loses information with respect to the original document; for example: formulas have to be omitted, tables have to be reduced etc.. The net result is that this method does not provide a secure authentication of any kind of digital documents.

### 1.3 Objective of the Invention

The invention is based on the objective to provide a technology which unequivocally guarantees a well-defined and stable interpretation of an electronically signed document and which at the same time provides an approach facilitating automatic further processing of electronically signed documents in the course of electronic commerce.

### 2. Summary and Advantages of the Invention

The objectives of the invention are solved by the independent claims. Further advantageous arrangements and embodiments of the invention are set forth in the respective subclaims.

The present invention relates to means, a method and a computer program product for providing an electronically signed document to an exploiter. The current invention suggests a first step of transforming a signer machine-readable source format of the document into a universal format representing said document identically and independently from a computer system used for its representation. In a second step the electronic signature is created based on the universal format of the document. Finally in a third step the electronic signature and a single representation of the document in an exchange format is provided to an exploiter.

Moreover the present invention relates to means, a method and a computer program product for further processing of the electronically signed document by an exploiter. It is suggested to validate the electronic signature by transforming the exchange format of the document into the universal format of the document and validating said signature with respect to said universal format of the document. Finally an exploiter machine-readable source format of the document is created from its exchange format.

The suggested approach supports that only a single representation of an electronically signed document has to be exchanged. At the same time the invention achieves that an unequivocally well-defined, stable and unambiguous interpretation of the electronically signed document can be guaranteed. Furthermore the invention provides an approach facilitating automatic further processing of electronically signed documents in the course of electronic commerce.

### 3. Brief Description of the Drawings

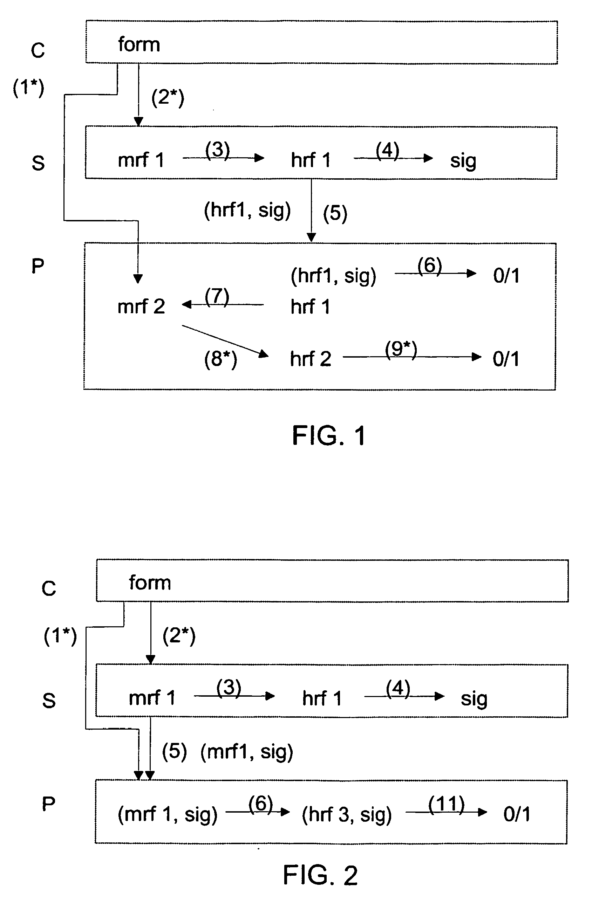

**Figure 1 and 2** shows the control and data flow of two possible embodiments of the current invention.

### 4. Description of the Preferred Embodiment

In the drawings and specification there has been set forth a preferred embodiment of the invention and, although specific terms are used, the description thus given uses terminology in a generic and descriptive sense only and not for purposes of limitation. It will, however, be evident that various modifications and changes may be made thereto without departing from the broader scope of the invention as set forth in the appended claims.

The present invention can be realized in hardware, software, or a combination of hardware and software. Any kind of computer system - or other apparatus adapted for carrying out the methods described herein - is suited. A typical combination of hardware and software could be a general purpose computer system with a computer program that, when being loaded and executed, controls the computer system such that it carries out the methods described herein. The present invention can also be embedded in a computer program product which comprises all the features enabling the implementation of the methods described herein, and which - when being loaded in a computer system - is able to carry out these methods.

Computer program means or computer program in the present context mean any expression, in any language, code or notation, of a set of instructions intended to cause a system having an information processing capability to perform a particular function either directly or after either or both of the following a) conversion to another language, code or notation; b) reproduction in a different material form.

The current invention uses the term "document" in its most general meaning referring to any type of entity for which an electronic signature may be generated. Examples for such documents are declarations, agreements, depictions, contracts, graphics, audio/video data or any other arbitrary type of signable data.

### 4.1 Solution

A solution to above mentioned objectives can be achieved according to the following fundamental observations:
1. When providing an electronically signed document by a signer it is not advisable to create an electronic signature based on a signer's machine-readable source format of that document. As discussed above a signer machine-readable source format of a document always has to be interpreted by the computer system of an exploiter. Due to context dependencies influencing this interpretation process an unequivocal and stable interpretation of a document cannot be guaranteed when exchanging this document in the course of business.
2. The current invention therefore suggests to first transform the machine-readable source format of the signer of a document into a **universal format** representing the document identically and independently from a computer system used for its representation. Such a representation is necessary to guarantee an unequivocal semantic of the document being independent from the context in which the representation is used. Such a universal format of a document may be its graphical representation, i.e., something that can be displayed on a computer screen like the set of (black/white or colored) pixels that represent this document on the computer screen. Another example for such a universal representation would be the binary representation of the document with respect to a certain printer type. Of course many more such universal formats do exist. In the following we call such a representation a ***bitmap.***
3. It is further suggested to create the electronic signature based on the universal format of the document, i.e. not based on the signer machine-readable source format. As background information with respect to electronic signatures it is noted that the created electronic signature is depending on the document for which the signature is created; that is, 2 different documents or 2 different representations of the same document would result in different electronic signatures even if signed by the same signer.
4. When the signer of that document introduces the document into the course of business it is suggested
   a. to provide the electronic signature **based on said universal format** of the document and
   b. a **single** representation of the document in an exchange format (the exchange format being characterized by allowing an exploiter to create the universal format of the document himself based on the exchange format of the document) to the exploiters of the document. As a single representation of the document is exchanged only the current solution can guarantee that no synchronization problem occurs like in situations where tupels of documents are exchanged (refer to the discussion above) which are susceptible for cheating signers. Using an electronic signature based on the universal format of the document guarantees a fixed and unequivocal interpretation.
5. Once the document in its universal format and the electronic signature is available to the exploiter the current invention teaches the exploiter to transform the received exchange format of the document into the universal format of the document. Based on the universal format of the document a validation of the signature can be performed. Finally, the exploiter creates an exploiter machine-readable source format of the document from the exchange format; this exploiter machine-readable source format would then form the basis for further automatic processing of the document by the exploiter endowed with the confidence to match the interpretation of the document as actually signed by the signer.
   As to the **exchange format** of the document 2 possible solution examples are provided by the current invention.
   5.1 In a first solution the exchange format is identical to the universal format of the document. In this situation the validation of the electronic signature is possible right away using standard techniques. The exploiter machine-readable source format of the document can be created for instance by applying pattern recognition technology to the universal format, which would recognize and extract the individual components within the document. As a specific pattern recognition approach the OCR techniques could be used for instance.
   5.2 In the second solution the exchange format of the document is identical (up to trivial representational differences relating for instance to different operating systems) with the signer machine-readable source format of the document. In this situation creation of the exploiter machine-readable source format is very simple as it is identical to the exchange format of the document, or can be easily derived from it. The validation process of electronic signature actually is a repetition of a step which also has been performed by the signer. The exploiter of the document would use the signer machine-readable source format of the document to transform it into its corresponding universal format; having this available it can be verified if the electronic signature has been created for the just created universal format of said document.

### 4.2 Two Possible Embodiments Of The Current Invention

The following preferred embodiments of the current invention refer to a system with communicating entities, such as computers in a network, that can play three roles, ***C*** (as the creator of the applications that produce or further process signed documents), ***S*** (as the signer of a document), ***P*** (as the processor, or in other words the exploiter, of a document). Of course these communicating entities may also be realized within a single computer system playing the roles described above. Moreover, some of these roles may be combined into the single entity; for instance the role of the creator c and the role of the signer ***s*** maybe combined into a single signer role ***s***. Therefore, the introduction of these roles should be understood from a conceptual point only and do not relate to a physical separation which has to be enforced by the invention.

A first preferred embodiment of the current invention is shown in Fig. 1.

As a signer, ***S*,** an entity produces the data, that is the document, to be signed in some machine readable form ***mrf*1,** also referred to as the signer machine-readable source format of the document in the following. In Step (3) signer ***S*** transforms ***mrf*1** into a human readable form ***hrf*1,** a bitmap, which is in Step (4) electronically signed, yielding signature ***sig*.** Generally ***hrf1*** is the **universal format** representing the document identically and independently from a computer system used for its representation. Such a representation is necessary to guarantee an unequivocal interpretation of the document being independent from the context in which the representation is used. In this specific embodiment of the current invention the universal format ***hrf1*** has been chosen to be human readable at the same time.

In Step (5) the signature ***sig*** and a **single** representation of that document are sent to an entity ***P*,** acting as processor or in other words as exploiter of the document. As said single representation of the document an **exchange format** is used. In this concrete embodiment of the invention the universal format, that is the human readable format ***hrf*1,** is used as said exchange format.
As a side remark it should be mentioned that signature systems exist which, when creating an "electronic signature", actually do create a combination of the signed document and the "proper" electronic signature. Within such contexts it would of course be sufficient that within Step (5) such an "integrated" electronic signature is sent to the processor P only. Similar obvious modifications in other parts of the representation of the current invention would have to take place without deviating from the spirit of the proposed invention if such signature systems are used to implement the current invention. Thus, the current specification is using the term of an electronic signature as referring to the proper electronic signature only not including the signed document.

In Step (6) processor ***P*** verifies the validity of signature ***sig,*** as defined for the electronic signature system used. It is pointed out that the signature verification takes place with respect to the document in its universal format, that is in its format ***hrf*1.** Result 0 indicates that the verification failed (i.e., ***sig*** is not a valid signature on ***hrf*1),** in which case ***P*** raises an exception and does not process ***hrf*1** further. Result 1 indicates that ***sig*** is a valid signature and ***hrf*1** can be processed further.

In Step (7) processor ***P*** extracts from ***hrf*1** a machine readable form ***mrf*2** (also referred to as the exploiter machine-readable source format of the document in the following) that can be used for automatic processing. This extraction is done, for instance, by applying well-known techniques from OCR or some other pattern recognition technologies to a bitmap ***hrf*1,** or to specific parts of a bitmap. ***mrf*2** does not necessarily represent all the data signed, i.e., the implicit mapping from ***mrf*1** to ***mrf*2** is not necessarily injective.

In an optional Step (8*) ***mrf*2** is mapped to a human readable form ***hrf*2,** and in an optional Step (9*) ***hrf*1** and ***hrf*2** are compared. This comparison might be, for instance, a test for equality of all of ***hrf*1** and ***hrf*2,** or a test for equality of certain parts of ***hrf*1** and ***hrf*2**.

Step (6) does not need to be performed first; instead it can be arbitrarily parallelized with Steps (7), (8*), (9*), or postponed until a proof of validity is actually needed.

In optional Steps (1*) and (2*) a creator, ***C*,** sends information used to create ***mrf*1, *hrf*1** and ***mrf*2, *hrf*2** to ***S*** and ***P*,** respectively. This can happen any time before the other steps are taken, and once together for several executions of the other steps. The information ***C*** sends completely or partially specifies the application that is used by ***S*** to produce ***mrf*1** and ***hrf*1,** and the application used by ***P*** to extract ***mrf*2** from ***hrf*1** and to produce ***hrf*2.** This indication on the application used to create the signer machine-readable source format of that document may be exploited by the pattern recognition technology in creating the exploiter machine-readable source format of the document.

A second preferred embodiment of the current invention is shown in Fig. 2 reflecting a variant of the first embodiment.

Steps (3) and (4) are realized as before. The human readable form ***hrf*1** might be a bitmap, or any other universal format of the document that can be unambiguously presented to the user.

In Step (5) the machine readable form ***mrf*1** and signature ***sig*** are sent to an entity ***P*.** As a difference with respect to the first embodiment the document is provided to the exploiter in the signer machine-readable source format ***mrf*1** as exchange format of said document.

In Step (6) processor ***P*** repeats Step (3) of the signer and produces the same universal format of the document, which has been created by the signer to sign the document. In the current embodiment this means to create a human readable form ***hrf*3** from ***mrf*1.** In a further optional improvement of this embodiment the signer could provide within Step (5) to the exploiter a further indication by which application the universal format ***hrf1*** of the document has been created. This would allow the exploiter to use exactly this application for transforming the signer machine-readable source format ***mrf*1** of said document into said universal format ***hrf*3** thus excluding any potential ambiguities within this transformation process.

In Step (11) processor ***P*** verifies the validity of signature ***sig*** relative to the self-constructed universal format ***hrf*3** of the document. If ***sig*** is valid and the signature scheme is secure then ***hrf*3** = ***hrf*1,** i.e., this demonstrates that ***sig*** is a valid signature on ***hrf*1** as well. Like before, Step (11) can be postponed until a proof of validity is actually needed.

In the optional Steps (1*) and (2*) a creator, ***C*,** sends information used to create ***mrf*1, *hrf*1** and **hrf3** to ***S*** and ***P*,** respectively. This can happen any time before the other steps are taken, and once together for several executions of the other steps. This information completely or partially specifies the applications that are used by ***C*** and ***P*** to produce ***mrf1***, ***hrf1*** and ***hrf*3.**

## Claims

1. A computerized method for providing an electronically signed document by a signer of said document,
said method comprising
a first step (3) of transforming a signer machine-readable source format (mrf1) of said document into a universal format (hrf1) representing said document identically and independently from a computer system used for its representation, and
a second step (4) of creating an electronic signature (sig) based on said universal format of said document, and
a third step (5) of providing to an exploiter of said document said electronic signature and a single representation of said document in an exchange format, said exchange format being different from said universal format and said exchange format allowing said exploiter
to verify validity of said signature with respect to said document in said universal format, and
to create an exploiter machine-readable source format of said document for further processing by said exploiter in validated conformance with said representation of said document in said universal format.

2. The method according to claim 1,
wherein in said third step
said exchange format of said document is said signer machine-readable source format and said exploiter machine-readable source format being a representation of said signer machine-readable source format, and
said exploiter being allowed to validate conformance with said universal format by transforming said signer machine-readable source format of said document into said universal format and by validating said provided signature against said universal format of said document.

3. The method according to claim 1,
said method further providing to said exploiter a first indication by which first computer-based application said signer machine-readable source format of said document has been created allowing said exploiter to create said exploiter machine-readable source format for said first application during said post-processing.

4. The method according to claim 2,
said method further providing to said exploiter a second indication by which second application said universal format of said document has been created allowing said exploiter to use said second application for transforming said signer machine-readable source format of said document into said universal format.

5. The method according to claim 3 or 4,
wherein said universal format is a pixel representation of said document, or
wherein said the universal format is a bit-map, or
wherein said universal format is a binary representation of said document with respect to a certain printer type.

6. A computerized method for further processing of an electronically signed document by an exploiter,
said method comprising
a first step (5) of receiving
a single representation of said document in an exchange format, and
an electronic signature (sig) based on an universal format of said document, said universal format representing said document identically and independently from a computer system used for its representation and said exchange format being different from said universal format,
a second step of validating (6, 11) said signature by transforming said exchange format of said document into said universal format (hrf1) of said document and validating said signature with respect to said universal format of said document, and
a third step of creating (5, 7) an exploiter machine-readable source format of said document from said exchange format.

7. The method according to claim 6,
wherein said exploiter machine-readable source format of said document is created from said universal format by pattern recognition technology.

8. The method according to claim 6,
wherein in said first step said exchange format of said document is said signer machine-readable source format and wherein in said step third step said exploiter machine-readable source format being a representation of said signer machine-readable source format.

9. The method according to claim 6,
wherein in said first step further receiving a first indication by which first computer-based application said signer machine-readable source format of said document has been created, and
wherein in said third step said exploiter machine-readable source format is created for said first application.

10. The method according to claim 8,
wherein in said first step further receiving a second indication by which second computer-based application said universal format of said document has been created, and
wherein in said second step using said second application for transforming said signer machine-readable source format of said document into said universal format.

11. The method according to claim 7 or 9,
wherein said universal format is a pixel representation of said document, or
wherein said the universal format is a bit-map, or
wherein said universal format is a binary representation of said document with respect to a certain printer type.

12. System comprising means adapted for carrying out the steps of the method according to anyone of the preceding claims 1 to 5.

13. System comprising means adapted for carrying out the steps of the method according to anyone of the preceding claims 6 to 11.

14. A data processing program for execution in a data processing system comprising software code portions for performing a method according to anyone of the preceding claims 1 to 5 when said program is run on said computer.

15. A data processing program for execution in a data processing system comprising software code portions for performing a method according to anyone of the preceding claims 6 to 11 when said program is run on said computer.

## Patentansprüche

1. Computergestütztes Verfahren für das Bereitstellen eines Dokuments, das von einem Unterzeichner des Dokuments elektronisch unterzeichnet wurde,
wobei das Verfahren Folgendes umfasst:
einen ersten Schritt (3) des Umwandelns eines maschinenlesbaren Unterzeichner-Quellformats (mrf1) des Dokuments in ein allgemein gültiges Format (hrf1), welches das Dokument völlig gleich und unabhängig von einem Computersystem, das für seine Darstellung verwendet wird, darstellt, und
einen zweiten Schritt (4) des Erzeugens einer elektronischen Unterschrift (sig) auf der Grundlage des allgemein gültigen Formats des Dokuments und
einen dritten Schritt (5) des Bereitstellens der elektronischen Unterschrift und einer einzelnen Darstellung des Dokuments in einem Austauschformat für einen Nutzer des Dokuments, wobei sich das Austauschformat von dem allgemein gültigen Format unterscheidet und wobei das Austauschformat dem Nutzer gestattet,
die Gültigkeit der Unterschrift hinsichtlich des Dokuments in dem allgemein gültigen Format zu überprüfen und
ein maschinenlesbares Nutzer-Quellformat des Dokuments zur weiteren Verarbeitung durch den Nutzer zu erzeugen, wenn eine Übereinstimmung mit der Darstellung des Dokuments in dem allgemein gültigen Format bestätigt wurde.

2. Verfahren nach Anspruch 1,
wobei es sich in dem dritten Schritt
bei dem Austauschformat des Dokuments um das maschinenlesbare Unterzeichner-Quellformat handelt und das maschinenlesbare Nutzer-Quellformat eine Darstellung des maschinenlesbaren Unterzeichner-Quellformats ist und wobei dem Nutzer gestattet wird, die Übereinstimmung mit dem allgemein gültigen Format zu überprüfen, indem das maschinenlesbare Unterzeichner-Quellformat des Dokuments in das allgemein gültige Format umgewandelt wird und indem die bereitgestellte Unterschrift mit dem allgemein gültigen Format des Dokuments auf ihre Übereinstimmung verglichen wird.

3. Verfahren nach Anspruch 1,
wobei das Verfahren ferner dem Nutzer eine erste Meldung bereitstellt, die angibt, durch welche erste computergestützte Anwendung das maschinenlesbare Unterzeichner-Quellformat des Dokuments erzeugt wurde, die dem Nutzer gestattet, das maschinenlesbare Nutzer-Quellformat während der Nachverarbeitung für die erste Anwendung zu erzeugen.

4. Verfahren nach Anspruch 2,
wobei das Verfahren ferner dem Nutzer eine zweite Meldung bereitstellt, die angibt, durch welche zweite Anwendung das allgemein gültige Format des Dokuments erzeugt wurde, die dem Nutzer gestattet, die zweite Anwendung zu verwenden, um das maschinenlesbare Unterzeichner-Quellformat des Dokuments in das allgemein gültige Format umzuwandeln.

5. Verfahren nach Anspruch 3 oder 4,
wobei es sich bei dem allgemein gültigen Format um eine Bildpunktdarstellung des Dokuments handelt oder
wobei es sich bei dem allgemein gültigen Format um eine Bitmap handelt oder
wobei das allgemein gültige Format eine binäre Darstellung des Dokuments mit Blick auf einen bestimmten Druckertyp ist.

6. Computergestütztes Verfahren für das weitere Verarbeiten eines elektronisch unterzeichneten Dokuments durch einen Nutzer,
wobei das Verfahren Folgendes umfasst:
einen ersten Schritt (5) des Empfangens
einer einzelnen Darstellung des Dokuments in einem Austauschformat und
einer elektronischen Unterschrift (sig) auf der Grundlage eines allgemein gültigen Formats des Dokuments, wobei das allgemein gültige Format das Dokument völlig gleich und unabhängig von einem Computersystem, das für seine Darstellung verwendet wird, darstellt und wobei sich das Austauschformat von dem allgemein gültigen Format unterscheidet,
einen zweiten Schritt des Überprüfens (6, 11) der Unterschrift, indem das Austauschformat des Dokuments in das allgemein gültige Format (hrf1) des Dokuments umgewandelt und die Unterschrift mit Blick auf das allgemein gültige Format des Dokuments überprüft wird, und
einen dritten Schritt des Erzeugens (5, 7) eines maschinenlesbaren Nutzer-Quellformats des Dokuments aus dem Austauschformat.

7. Verfahren nach Anspruch 6,
wobei das maschinenlesbare Nutzer-Quellformat des Dokuments anhand einer Mustererkennungstechnologie aus dem allgemein gültigen Format erzeugt wird.

8. Verfahren nach Anspruch 6,
wobei in dem ersten Schritt das Austauschformat des Dokuments das maschinenlesbare Unterzeichner-Quellformat ist und wobei in dem dritten Schritt das maschinenlesbare Nutzer-Quellformat eine Darstellung des maschinenlesbaren Unterzeichner-Quellformats ist.

9. Verfahren nach Anspruch 6,
wobei in dem ersten Schritt ferner eine erste Meldung empfangen wird, die angibt, durch welche erste computergestützte Anwendung das maschinenlesbare Unterzeichner-Quellformat des Dokuments erzeugt wurde, und
wobei in dem dritten Schritt das maschinenlesbare Nutzer-Quellformat für die erste Anwendung erzeugt wird.

10. Verfahren nach Anspruch 8,
wobei in dem ersten Schritt ferner eine zweite Meldung empfangen wird, die angibt, durch welche computergestützte Anwendung das allgemein gültige Format des Dokuments erzeugt wurde, und
wobei in dem zweiten Schritt die zweite Anwendung verwendet wird, um das maschinenlesbare Unterzeichner-Quellformat des Dokuments in das allgemein gültige Format umzuwandeln.

11. Verfahren nach Anspruch 7 oder 9,
wobei es sich bei dem allgemein gültigen Format um eine Bildpunktdarstellung des Dokuments handelt oder
wobei es sich bei dem allgemein gültigen Format um eine Bitmap handelt oder
wobei das allgemein gültige Format eine binäre Darstellung des Dokuments mit Blick auf einen bestimmten Druckertyp ist.

12. System, das ein Mittel umfasst, welches so gestaltet ist, dass es die Schritte des Verfahrens gemäß einem beliebigen der vorangegangenen Ansprüche 1 bis 5 ausführt.

13. System, das ein Mittel umfasst, welches so gestaltet ist, dass es die Schritte des Verfahrens gemäß einem beliebigen der vorangegangenen Ansprüche 6 bis 11 ausführt.

14. Datenverarbeitungsprogramm zur Ausführung in einem Datenverarbeitungssystem, das Softwarecodeabschnitte zur Ausführung eines Verfahrens gemäß einem beliebigen der vorangegangenen Ansprüche 1 bis 5 umfasst, wenn das Programm auf dem Computer ausgeführt wird.

15. Datenverarbeitungsprogramm zur Ausführung in einem Datenverarbeitungssystem, das Softwarecodeabschnitte zur Ausführung eines Verfahrens gemäß einem beliebigen der vorangegangenen Ansprüche 6 bis 11 umfasst, wenn das Programm auf dem Computer ausgeführt wird.

## Revendications

1. Procédé informatisé de fourniture d'un document signé électroniquement par un signataire dudit document,
le procédé comprenant
une première étape (3) consistant à transformer un format source lisible par une machine de signataire (mrf1) dudit document en un format universel (hfr1) représentant ledit document de manière identique et indépendante du système informatique utilisé pour sa représentation, et
une deuxième étape (4) consistant à créer une signature électronique (sig) sur la base dudit format universel dudit document, et
une troisième étape (5) consistant à fournir à un exploitant dudit document ladite signature électronique et une représentation unique dudit document dans un format d'échange, ledit format d'échange étant différent dudit format universel et ledit format d'échange permettant audit exploitant
de vérifier la validité de ladite signature par rapport audit document dans ledit format universel, et
de créer un format source lisible par une machine d'exploitant dudit document en vue d'un traitement ultérieur par ledit exploitant en conformité validée avec ladite représentation dudit document dans ledit format universel.

2. Procédé selon la revendication 1,
dans lequel, dans ladite troisième étape
ledit format d'échange dudit document est ledit format source lisible par une machine de signataire et ledit format source lisible par une machine est une représentation dudit format source lisible par une machine de signataire, et
ledit exploitant est autorisé à valider la conformité audit format universel en transformant ledit format source lisible par une machine de signataire dudit document en ledit format universel et en validant ladite signature fournie vis-à-vis dudit format universel dudit document.

3. Procédé selon la revendication 1,
ledit procédé fournissant en outre audit exploitant une première indication de la première application basée sur un ordinateur par le biais de laquelle ledit format source lisible par une machine de signataire dudit document a été créé, en permettant audit exploitant de créer ledit format source lisible par une machine d'exploitant pour ladite première application au cours du post-traitement.

4. Procédé selon la revendication 2,
ledit procédé fournissant en outre audit exploitant une deuxième indication de la deuxième application par le biais de laquelle ledit format universel dudit document a été créé, en permettant audit exploitant d'utiliser ladite deuxième application pour transformer ledit format source lisible par une machine de signataire dudit document en ledit format universel.

5. Procédé selon la revendication 3 ou 4,
dans lequel ledit format universel est une représentation en pixels dudit document, ou
dans lequel ledit format universel est une représentation en mode point, ou
dans lequel ledit format universel est une représentation binaire dudit document par rapport à un certain type d'imprimante.

6. Procédé informatisé de traitement ultérieur d'un document signé électroniquement par un exploitant,
ledit procédé comprenant
une première étape (5) consistant à recevoir une seule représentation dudit document dans un format d'échange, et
une signature électronique (sig) fondée sur un format universel dudit document, ledit format universel représentant ledit document de manière identique et indépendante d'un système informatique utilisé pour sa représentation et ledit format d'échange étant différent dudit format universel,
une deuxième étape consistant à valider (6, 11) ladite signature en transformant ledit format d'échange dudit document en ledit format universel (hrf1) dudit document et à valider ladite signature par rapport audit format universel dudit document, et
une troisième étape consistant à créer (5, 7) un format source lisible par une machine d'exploitant dudit document à partir dudit format d'échange.

7. Procédé selon la revendication 6,
dans lequel ledit format source lisible par une machine d'exploitant dudit document est créé à partir dudit format universel par le biais d'une technologie de reconnaissance de formes.

8. Procédé selon la revendication 6,
dans lequel, dans ladite première étape, ledit format d'échange dudit document est ledit format source lisible par une machine de signataire et dans lequel, dans ladite troisième étape, ledit format source lisible par une machine d'exploitant est une représentation dudit format source lisible par une machine de signataire.

9. Procédé selon la revendication 6,
dans lequel, dans ladite première étape, il est en outre reçu une première indication de la première application basée sur ordinateur par le biais de laquelle ledit format source lisible par une machine de signataire dudit document a été créé, et
dans lequel, dans ladite troisième étape, ledit format source lisible par une machine d'exploitant est créé pour ladite première application.

10. Procédé selon la revendication 8,
dans lequel, dans ladite première étape, il est en outre reçu une deuxième indication de la deuxième application basée sur un ordinateur par le biais de laquelle ledit format universel dudit document a été créé, et
dans lequel, dans ladite deuxième étape, il est utilisé ladite deuxième application pour transformer ledit format source lisible par une machine de signataire dudit document en ledit format universel.

11. Procédé selon la revendication 7 ou 9,
dans lequel ledit format universel est une représentation en pixels dudit document, ou
dans lequel ledit format universel est une représentation en mode point, ou
dans lequel ledit format universel est une représentation binaire dudit document par rapport à un certain type d'imprimante.

12. Système comprenant un moyen conçu pour exécuter les étapes du procédé selon l'une quelconque des revendications précédentes 1 à 5.

13. Système comprenant un moyen conçu pour exécuter les étapes du procédé selon l'une quelconque des revendications précédentes 6 à 11.

14. Programme de traitement de données à exécuter dans un système de traitement de données comprenant des parties de code logiciel pour exécuter un procédé selon l'une quelconque des revendications précédentes 1 à 5 lorsque ledit programme est exécuté sur ledit ordinateur.

15. Programme de traitement de données à exécuter dans un système de traitement de données comprenant des parties de code logiciel pour exécuter un procédé selon l'une quelconque des revendications précédentes 6 à 11 lorsque ledit programme est exécuté sur ledit ordinateur.
